# EUROPEAN PATENT APPLICATION

(11) **EP 4 787 997 A1**
(43) Date of publication of application: **05.08.2026**
(21) Application number: 24870270.6
(22) Date of filing: 26.08.2024
(51) Int. Cl.: H04W 72/0446

(54) **RESOURCE SELECTION METHOD, DATA TRANSMISSION METHOD, APPARATUS, AND TERMINAL**

(30) Priority: 27.09.2023 CN 202311267357
(71) Applicant: Datang Mobile Communications Equipment Co., Ltd., Beijing 100085 (CN)
(72) Inventor: SHI, Jie, Beijing 100085 (CN); XIAO, Xiao, Beijing 100085 (CN)
(74) Representative: dompatent
(86) International application number: PCT/CN2024/114434
(87) International publication number: WO 2025/066724

(57) **Abstract**

A resource selection method and apparatus, a data transmission method and apparatus, and a terminal are provided. The method includes: determining, by a first terminal, value of the number of slots of multiple consecutive slots (MCSt), where the value of the number of slots includes at least one of the following: a number of slots included in one MCSt; a number of MCSts included in one resource transmission period; or a total number of slots of all MCSts included in one resource transmission period.

## Description

### CROSS-REFERENCE TO RELATED APPLICATION

This application claims a priority of Chinese Patent Application No. 202311267357.1 entitled "RESOURCE SELECTION METHOD AND APPARATUS, DATA TRANSMISSION METHOD AND APPARATUS, AND TERMINAL" filed on September 27, 2023, the entire contents of which are hereby incorporated by reference in their entirety.

### TECHNICAL FIELD

The present disclosure relates to the field of communication technologies, and in particular to a resource selection method and apparatus, a data transmission method and apparatus, and a terminal.

### BACKGROUND

For Sidelink-Unlicense (Sidelink-Unlicense, SL-U), a multiple consecutive slots (Mutiple Consecutive Slots, MCSt) mechanism is introduced, allowing user equipment (User Equipment, UE) to transmit a transport block (Transport Block, TB) across multiple consecutive slots, which avoid inefficient data transmission caused by a channel contention mechanism of SL-U.

In multiple slots corresponding to one MCSt, one initial transmission and multiple retransmissions for one TB may be transmitted. In related technologies, a number of retransmissions for one TB is limited by the maximum number of transmissions configured by a radio resource control (Radio Resource Control, RRC) layer related to the channel busy ratio (Channel Busy Ratio, CBR). However, since the number of slots in one MCSt on an SL-U channel cannot be determined, a specific slot position required for TB transmission cannot be clearly determined. This may lead to the number of TB retransmissions exceeding the agreed number of transmissions, which may affect other UEs using Sidelink (Sidelink, SL) radio resources.

### SUMMARY

The present disclosure is to provide a resource selection method and apparatus, a data transmission method and apparatus, and a terminal, which solves the problem that UE cannot use an appropriate channel resource.

An embodiment of the present disclosure provides a resource selection method, including:
determining, by a first terminal, value of the number of slots of multiple consecutive slots (MCSt), where the value of the number of slots includes at least one of the following:
a number of slots included in one MCSt;
a number of MCSts included in one resource transmission period; or
a total number of slots of all MCSts included in one resource transmission period.

In some embodiments, the determining the value of the number of consecutive slots for multiple consecutive slots (MCSt) includes:
determining the number of the slots included in the one MCSt according to an channel occupancy time (COT) duration to a channel access priority class (CAPC) and/or a maximum number of transmissions for a transport block (TB).

In some embodiments, the determining the number of the slots included in the one MCSt according to the channel occupancy time (COT) duration to the CAPC and/or the maximum number of the transmissions for the TB includes:
determining that the number of the slots included in the one MCSt is less than or equal to a first number, where the first number includes at least one of the following:
a number of slots corresponding to a maximum COT duration to the CAPC of the TB;
a number of slots corresponding to a maximum COT duration to the CAPC of the MCSt;
a number of slots corresponding to a maximum number of TB transmissions corresponding to a channel busy rate (CBR) and a data priority;
a minimum value between the number of slots corresponding to the maximum COT duration to the CAPC of the TB and the number of slots corresponding to the maximum number of TB transmissions corresponding to the CBR and the data priority; or
a minimum value between the number of slots corresponding to the maximum COT duration to the CAPC of the MCSt and the number of slots corresponding to the maximum number of TB transmissions corresponding to the CBR and the data priority.

In some embodiments, the determining that the number of the slots included in the one MCSt is less than or equal to the first number includes:
in a case where one TB occupies a resource of one slot, determining that the number of the slots included in the one MCSt is less than or equal to the maximum number of the TB transmissions corresponding to the CBR and the data priority.

In some embodiments, in a case where the first number is the number of slots corresponding to the maximum COT duration to the CAPC of the TB, a product of the number of the slots included in the one MCSt and a duration of each slot is less than or equal to the maximum COT duration to the CAPC of the TB; or
in a case where the first number is the number of slots corresponding to the maximum COT duration to the CAPC of the one MCSt, a product of the number of the slots included in the one MCSt and the time length of each slot is less than or equal to the maximum COT duration to the CAPC of the MCSt.

In some embodiments, the determining the value of the number of consecutive slots for multiple consecutive slots (MCSt) includes:
determining that a total number of TB initial transmissions and TB retransmissions corresponding to the total number of the slots of all the MCSts included in the one resource transmission period is less than or equal to the maximum number of TB transmissions corresponding to the CBR and the data priority; or,
determining that the total number of the slots of all the MCSts included in the one resource transmission period is less than or equal to the number of slots corresponding to the maximum number of TB transmissions corresponding to the CBR and the data priority.

In some embodiments, in a case where one resource transmission period includes a plurality of MCSts, each of the MCSts satisfies at least one of the following conditions:
a product of a number of slots included in the MCSt and a duration of each slot is less than or equal to a maximum COT duration to a CAPC of a TB; or
in a case where one TB occupies a resource of one slot, the number of slots included in the MCSt is less than or equal to a maximum number of TB transmissions corresponding to a CBR and a data priority.

In some embodiments, all the MCSts included in the one resource transmission period belong to one period where periodic resources are selected and reserved by the first terminal.

In some embodiments, the determining the value of the number of consecutive slots for multiple consecutive slots (MCSt) includes:
determining the number of the MCSts included in the one resource transmission period according to first information; and/or
determining the number of the MCSts included in the one resource transmission period according to configuration information of a network device.

In some embodiments, the first information includes at least one of the following:
a reliability requirement of the TB; or
a capability of a terminal supporting hybrid automatic repeat request (Hybrid Automatic Repeat Request, HARQ) feedback.

In some embodiments, the method further includes: receiving a maximum number of TB transmissions corresponding to a CBR and a data priority associated with the MCSt configured by a network device.

In some embodiments, the method further includes: transmitting a transmission block (TB) and/or retransmitting the TB to a second terminal according to the value of the number of slots of the MCSt.

In some embodiments, the method further includes: receiving, in a first slot of an n-th MCSt, HARQ feedback information transmitted by the second terminal, where n is greater than or equal to 2.

In some embodiments, a time interval between an n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

An embodiment of the present disclosure provides a data transmission method, including:
a second terminal receiving a TB initial transmission and/or a TB retransmission transmitted by a first terminal; and
the second terminal transmitting HARQ feedback information to the first terminal in a first slot of an n-th MCSt, where n is greater than or equal to 2.

In some embodiments, a time interval between the n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

An embodiment of the present disclosure provides a terminal, including: a memory, a transceiver, and a processor, where the memory is configured to store a computer program; the transceiver is configured to transmit and receive data under the control of the processor; the processor is configured to read the computer program in the memory and perform the following operations: determining value of the number of slots of multiple consecutive slots (MCSt), where the value of the number of slots includes at least one of the following:
a number of slots included in one MCSt;
a number of MCSts included in one resource transmission period; or
a total number of slots of all MCSts included in one resource transmission period.

In some embodiments, the processor is configured to read the computer program in the memory and perform the following operations: determining the number of the slots included in the one MCSt according to an channel occupancy time (COT) duration to a CAPC and/or a maximum number of transmissions for a TB.

In some embodiments, the processor is configured to read the computer program in the memory and perform the following operations:
determining that the number of the slots included in the one MCSt is less than or equal to a first number, where the first number includes at least one of the following:
a number of slots corresponding to a maximum COT duration to the CAPC of the TB;
a number of slots corresponding to a maximum COT duration to the CAPC of the MCSt;
a number of slots corresponding to a maximum number of TB transmissions corresponding to a channel busy rate (CBR) and a data priority;
a minimum value between the number of slots corresponding to the maximum COT duration to the CAPC of the TB and the number of slots corresponding to the maximum number of TB transmissions corresponding to the CBR and the data priority; or
a minimum value between the number of slots corresponding to the maximum COT duration to the CAPC of the MCSt and the number of slots corresponding to the maximum number of TB transmissions corresponding to the CBR and the data priority.

In some embodiments, the processor is configured to read the computer program in the memory and perform the following operations:
in a case where one TB occupies a resource of one slot, determining that the number of the slots included in the one MCSt is less than or equal to the maximum number of the TB transmissions corresponding to the CBR and the data priority.

In some embodiments, in a case where the first number is the number of slots corresponding to the maximum COT duration to the CAPC of the TB, a product of the number of the slots included in the one MCSt and a duration of each slot is less than or equal to the maximum COT duration to the CAPC of the TB; or
in a case where the first number is the number of slots corresponding to the maximum COT duration to the CAPC of the one MCSt, a product of the number of the slots included in the one MCSt and the time length of each slot is less than or equal to the maximum COT duration to the CAPC of the MCSt.

In some embodiments, the processor is configured to read the computer program in the memory and perform the following operations:
determining that a total number of TB initial transmissions and TB retransmissions corresponding to the total number of the slots of all the MCSts included in the one resource transmission period is less than or equal to the maximum number of TB transmissions corresponding to the CBR and the data priority; or,
determining that the total number of the slots of all the MCSts included in the one resource transmission period is less than or equal to the number of slots corresponding to the maximum number of TB transmissions corresponding to the CBR and the data priority.

In some embodiments, in a case where one resource transmission period includes a plurality of MCSts, each of the MCSts satisfies at least one of the following conditions:
a product of a number of slots included in the MCSt and a duration of each slot is less than or equal to a maximum COT duration to a CAPC of a TB; or
in a case where one TB occupies a resource of one slot, the number of slots included in the MCSt is less than or equal to a maximum number of TB transmissions corresponding to a CBR and a data priority.

In some embodiments, all the MCSts included in the one resource transmission period belong to one period where periodic resources are selected and reserved by the first terminal.

In some embodiments, the processor is configured to read the computer program in the memory and perform the following operations:
determining the number of the MCSts included in the one resource transmission period according to first information; and/or
determining the number of the MCSts included in the one resource transmission period according to configuration information of a network device.

In some embodiments, the first information includes at least one of the following:
a reliability requirement of the TB; or
a capability of a terminal supporting hybrid automatic repeat request (HARQ) feedback.

In some embodiments, the processor is configured to read the computer program in the memory and perform the following operations: receiving a maximum number of TB transmissions corresponding to a CBR and a data priority associated with the MCSt configured by a network device.

In some embodiments, the processor is configured to read the computer program in the memory and perform the following operations: transmitting a transmission block (TB) and/or retransmitting the TB to a second terminal according to the value of the number of slots of the MCSt.

In some embodiments, the processor is configured to read the computer program in the memory and perform the following operations: receiving, in a first slot of an n-th MCSt, HARQ feedback information transmitted by the second terminal, where n is greater than or equal to 2.

In some embodiments, a time interval between an n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

An embodiment of the present disclosure provides a terminal, including: a memory, a transceiver, and a processor, where the memory is configured to store a computer program; the transceiver is configured to transmit and receive data under the control of the processor; the processor is configured to read the computer program in the memory and perform the following operations: Receiving a TB and/or a retransmitted TB transmitted by a first terminal;
receiving a TB initial transmission and/or a TB retransmission transmitted by a first terminal; and
transmitting HARQ feedback information to the first terminal in a first slot of an n-th MCSt, where n is greater than or equal to 2.

In some embodiments, a time interval between the n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

An embodiment of the present disclosure provides a resource selection apparatus, including:
a first determining unit, configured to determine value of the number of slots of multiple consecutive slots (MCSt), where the value of the number of slots includes at least one of the following:
a number of slots included in one MCSt;
a number of MCSts included in one resource transmission period; or
a total number of slots of all MCSts included in one resource transmission period.

An embodiment of the present disclosure provides a data transmission apparatus, including:
a first receiving unit, configured to receive a TB initial transmission and/or a TB retransmission transmitted by a first terminal; and
a first transmitting unit, configured to transmit HARQ feedback information to the first terminal in a first slot of an n-th MCSt, where n is greater than or equal to 2.

An embodiment of the present disclosure provides a processor-readable storage medium, having a computer program stored thereon, where the computer program, when executed by a processor, causes steps of the above resource selection method to be implemented, or causes steps of the above data transmission method to be implemented.

The above technical solutions of the present disclosure have the following beneficial effects. In the embodiments of the present disclosure, the first terminal can determine one or more information such as a number of slots included in one MCSt; a number of MCSts included in one resource transmission period; or a total number of slots of all MCSts included in one resource transmission period. The method for determining a number of slots of MCSt on an SL-U channel is clarified, so that the physical layer can determine a slot position required for TB (re)transmission, effectively preventing the number of TB retransmissions from exceeding an agreed value, and allowing each UE to utilize appropriate transmission resources.

### BRIEF DESCRIPTION OF THE DRAWINGS

FIG. 1 is a schematic diagram of a cellular communication network according to an embodiment of the present disclosure;
FIG. 2 is a schematic diagram of a sidelink network according to an embodiment of the present disclosure;
FIG. 3 is a flow chart of a resource selection method according to an embodiment of the present disclosure;
FIG. 4 is a schematic diagram showing TB transmissions according to an embodiment of the present disclosure;
FIG. 5 is a flow chart of a data transmission method according to an embodiment of the present disclosure;
FIG. 6 is a schematic structural diagram of a resource selection apparatus according to an embodiment of the present disclosure;
FIG. 7 is a schematic structural diagram of a data transmission apparatus according to an embodiment of the present disclosure;
FIG. 8 is a first schematic structural diagram of a terminal according to an embodiment of the present disclosure; and
FIG. 9 shows a second schematic structural diagram of a terminal according to an embodiment of the present disclosure.

### DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics can be combined in one or more embodiments in any suitable manner.

In various embodiments of the present disclosure, it should be appreciated that the size of a sequence number of each of the following processes does not imply the order of execution, and the execution order of each process should be determined based on the function and internal logic of each process, which should not constitute any limitations on the implementation process of the present disclosure.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

To describe the embodiments of the present disclosure, some concepts used in the following description are first explained.

### 1. Cellular Network Communications

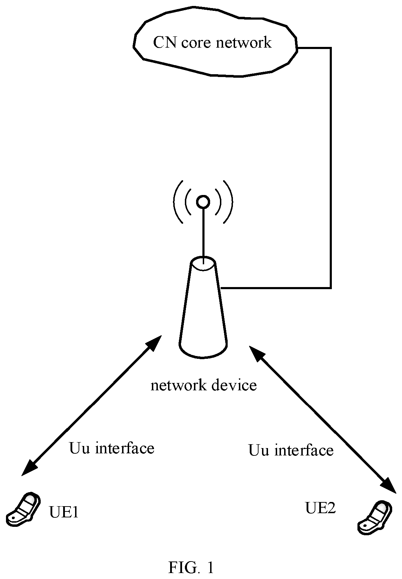

In cellular network communications, uplink/downlink data and control information are transmitted between a terminal and a network device over a Uu interface, as shown in FIG. 1.

### 2. Sidelink

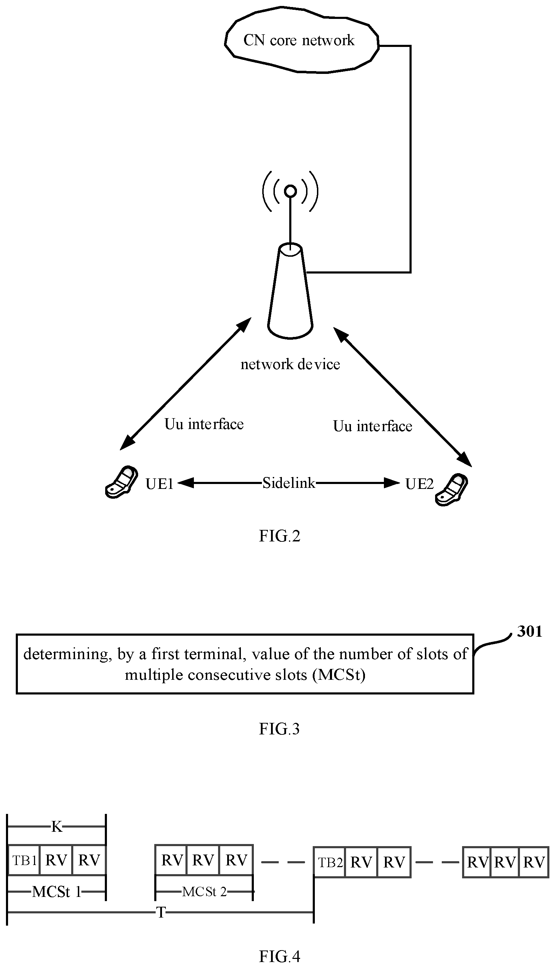

Sidelink refers to a method by which adjacent terminals can transmit data within a short distance through a sidelink (also referred to as Sidelink or PC5). The wireless interface corresponding to the Sidelink is referred to as a sidelink interface (also referred to as a Sidelink interface or PC5 interface), as shown in FIG. 2.

In the sidelink interface, UE may work in unicast (Unicast, UC), broadcast (Broadcast, BC), and groupcast (Groupcast, GC). In the UC mode, a transport UE (Transport UE, TxUE) and a receive UE (Receive UE, RxUE) have an SL RRC connection for transmitting RRC layer message(s).

### 3. CAPC Mechanism:

As shown in Table 1 below, when a UE performs MCSt in SL-U, it needs to constrain its maximum channel occupancy time T_{slm cot, p} based on a CAPC value, i.e., to limit the number of consecutive slots that can be selected consecutively. A duration of resources occupied each time shall not exceed T_{slm cot, p}.

**Table 1: CAPA in SL**

| CAPA(p) | mₚ | CW_{min, p} | CW_{max, p} | T_{slm cot, p} | Allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms or 10 ms | {15,31,63,127,255,511,1023} |
| 4 | 7 | 15 | 1023 | 6ms or 10 ms | {15,31,63,127,255,511,1023} |
| NOTE1: | for *p* = 3,4, *T_{slm cot,p}* = *10ms* if the higher layer parameter *sl-absenceOfAnyOtherTechnology-r18* is provided, otherwise, *T_{slm cot, p}* = 6*ms*. | | | | |
| NOTE 2: | when *T_{slm cot, p}* = 6ms, it may be increased to 8*ms* by inserting one or more gaps. The minimum duration of a gap shall be 100*µs.* The maximum duration before including any such gap shall be 6*ms*. | | | | |

In the case where a channel occupancy time exceeds T_{slm cot, p}, a channel access procedure is performed based on the channel access priority class p associated with a transmission of UE. As shown in Table 1 above, in SL-U scenarios, the maximum channel occupancy time varies with different CAPC values for the UE.

Embodiments of the present disclosure provide a resource selection method and apparatus, a data transmission method and apparatus, and a terminal to solve a problem that UE cannot use an appropriate channel resource.

The method and the apparatus are based on the same concept. Since the principles for solving problems by the method and the apparatus are similar, implementations of the method and the apparatus can refer to each other, and the repeated parts will not be described.

As shown in FIG. 3, an embodiment of the present disclosure provides a resource selection method, which is applied to a first terminal and specifically includes the following steps.

Step 301: determining, by a first terminal, value of the number of slots of multiple consecutive slots (MCSt), where the value of the number of slots includes at least one of the following:
a number of slots included in one MCSt;
a number of MCSts included in one resource transmission period; or
a total number of slots of all MCSts included in one resource transmission period.

In the embodiment, the first terminal may be a transmitting UE (Tx UE) in a sidelink, and the first terminal determines the value of the number of slots of the MCSt. In some embodiments, the value of the number of slots of the MCSt may be determined by an MAC layer of the first terminal, and the value of the number of slots of the MCSt may be transmitted to a physical layer.

Specifically, the value of the number of slots of the MCSt may include one or a combination of the following items: a number of slots included in one MCSt; a number of MCSts included in one resource transmission period; or a total number of slots of all MCSts included in one resource transmission period.

In the embodiments of the present disclosure, since a number of retransmissions of a TB is limited by a maximum number of transmissions configured by the RRC layer related to CBR, a number of slots of the MCSt is also limited by the maximum number of transmissions configured by the RRC layer related to the CBR, and the number of slots of the MCSt is also related to a time length of a preemptible channel agreed upon by a CAPC corresponding to the SL-U contention mechanism. The first terminal of the present disclosure can determine one or more information such as the number of slots included in the MCSt, the number of the MCSts included in one resource transmission period, and the total number of the slots of all the MCSts included in one resource transmission period. The method for determining a number of slots of MCSt on an SL-U channel is clarified, so that the physical layer can determine a slot position required for TB transmission, effectively preventing the number of TB retransmissions from exceeding an agreed value, and allowing each UE to utilize appropriate transmission resources.

As an optional embodiment, the determining the value of the number of consecutive slots for multiple consecutive slots (MCSt) includes: determining the number of the slots included in the one MCSt according to an channel occupancy time (COT) duration to a channel access priority class (CAPC) and/or a maximum number of transmissions for a TB.

In the embodiment, the channel occupancy time (COT) duration of the CAPC may be the maximum COT duration to the CAPC. The maximum number of transmissions of the TB may be the maximum number of transmissions configured by the RRC layer, and the maximum number of transmissions of the TB is configured based on the CBR and the data priority. In the embodiment, the number of slots included in one MCSt is jointly limited by the channel occupancy time (COT) duration of the CAPC corresponding to the TB and/or the maximum number of transmissions of the TB. The first terminal may determine the number of slots included in one MCSt based on the maximum COT duration to the CAPC and/or the maximum number of transmissions of the TB.

As an optional embodiment, the determining the number of the slots included in the one MCSt according to the channel occupancy time (COT) duration of the CAPC and/or the maximum number of the transmissions for the TB includes: determining that the number of the slots included in the one MCSt is less than or equal to a first number, where the first number includes at least one of the following:
(1) A number of slots corresponding to a maximum COT duration to the CAPC of the TB.
   In this case, the number of slots included in one MCSt is less than or equal to a number of slots corresponding to a maximum channel occupancy transmission time T_{slm cot, p} corresponding to a CAPC of a TB to be transmitted currently.
(2) A number of slots corresponding to a maximum COT duration to the CAPC of the MCSt.
   In this case, the number of slots included in an MCSt is less than or equal to the number of slots corresponding to the maximum channel occupancy transmission time T_{slm cot, p} corresponding to the CAPC of the MCSt.
(3) A number of slots corresponding to a maximum number of TB transmissions corresponding to a channel busy rate (CBR) and a data priority;
   In this case, the number of slots included in one MCSt is less than or equal to the number of slots of the maximum number of TB transmissions corresponding to the CBR and the data priority. The maximum number of TB transmissions corresponding to the CBR and the data priority may be configured by a network device.
(4) A minimum value between the number of slots corresponding to the maximum COT duration to the CAPC of the TB and the number of slots corresponding to the maximum number of TB transmissions corresponding to the CBR and the data priority.
   In this case, when determining the number of slots included in one MCSt, it may be considered that the number of the slots included in the one MCSt is less than or equal to a minimum value between a number T_{slm cot, p} of slots corresponding to the CAPC of the TB to be transmitted currently and the number of slots of a maximum number of TB transmissions, that is, min (the number T_{slm cot, p} of slots corresponding to the CAPC of the TB to be transmitted currently, the maximum number of TB transmissions corresponding to a current CBR and a data priority).
(5) A minimum value between the number of slots corresponding to the maximum COT duration to the CAPC of the MCSt and the number of slots corresponding to the maximum number of TB transmissions corresponding to the CBR and the data priority.

In this case, when determining the number of slots included in one MCSt, it may be considered that the number of slots included in one MCSt is less than or equal to a minimum value between the numberT_{slm cot, p} of slots corresponding to a CAPC of the MCSt and the number of slots corresponding to the maximum number of TB transmissions, that is, min (the number T_{slm cot, p} of slots corresponding to the CAPC of the MCSt, the maximum number of TB transmissions corresponding to the current channel CBR and the data priority).

In some embodiments, the determining that the number of the slots included in the one MCSt is less than or equal to the first number includes: in a case where one TB occupies a resource of one slot, determining that the number of the slots included in the one MCSt is less than or equal to the maximum number of the TB transmissions corresponding to the CBR and the data priority.

In the embodiment, when each TB transmission (including an initial transmission or a retransmission) occupies only resources in one slot, the number K of slots included in one MCSt is less than or equal to the maximum number of TB transmissions.

In some embodiments, in a case where the first number is the number of slots corresponding to the maximum COT duration to the CAPC of the TB, a product of the number of the slots included in the one MCSt and a duration of each slot is less than or equal to the maximum COT duration to the CAPC of the TB; or in a case where the first number is the number of slots corresponding to the maximum COT duration to the CAPC of the one MCSt, a product of the number of the slots included in the one MCSt and the time length of each slot is less than or equal to the maximum COT duration to the CAPC of the MCSt.

In the embodiment, the first terminal ensures that the product of the determined number K of slots of the MCSt and the duration corresponding to each slot is less than or equal to T_{slm cot, p} corresponding to the CAPC of the TB to be transmitted currently. Alternatively, the first terminal ensures that the product of the determined number K of slots of the MCSt and the duration corresponding to each slot is less than or equal to T_{slm cot, p} corresponding to the CAPC of the MCSt.

As an optional embodiment, the determining the value of the number of consecutive slots for multiple consecutive slots (MCSt) includes:
determining that a total number of TB initial transmissions and TB retransmissions corresponding to the total number of the slots of all the MCSts included in the one resource transmission period is less than or equal to the maximum number of TB transmissions corresponding to the CBR and the data priority; or,
determining that the total number of the slots of all the MCSts included in the one resource transmission period is less than or equal to the number of slots corresponding to the maximum number of TB transmissions corresponding to the CBR and the data priority.

In the embodiment, in one resource transmission period of SL in mode 2 (Mode2), there may be multiple MCSts for one TB, and the first terminal may determine a total number of slots of all MCSts included in the one resource transmission period. In this case, one resource transmission period may include multiple MCSts, and the total number of slots of these MCSts cannot exceed the maximum number of TB transmissions corresponding to the current channel CBR and the data priority, or, the total number of TB initial transmissions and TB retransmissions corresponding to the total number of slots of these MCSts cannot exceed the maximum number of TB transmissions corresponding to the current channel CBR and the data priority.

In some embodiments, in a case where one resource transmission period includes a plurality of MCSts, each of the MCSts satisfies at least one of the following conditions:
a product of a number of slots included in the MCSt and a duration of each slot is less than or equal to a maximum COT duration to a CAPC of a TB; or
in a case where one TB occupies a resource of one slot, the number of slots included in the MCSt is less than or equal to a maximum number of TB transmissions corresponding to a CBR and a data priority.

In the embodiment, in a case where a resource transmission period includes multiple MCSt, the first terminal ensures that the product of the number K of slots included in each MCSt and the time length corresponding to each slot is less than or equal to T_{slm cot, p} corresponding to the CAPC of the TB to be transmitted currently. Alternatively, in a case where each TB transmission (an initial transmission or a retransmission) only occupies resources of one slot, the first terminal ensures that the number K of slots included in each MCSt does not exceed the maximum number of TB transmissions.

In some embodiments, all the MCSts included in the one resource transmission period belong to one period where periodic resources are selected and reserved by the first terminal.

In the embodiment, in the case where one resource transmission period includes multiple MCSts, the multiple MCSt resources may belong to one period where periodic resources are selected and reserved by UE.

As an optional embodiment, the determining the value of the number of consecutive slots for multiple consecutive slots (MCSt) includes:
determining the number of the MCSts included in the one resource transmission period according to first information; and/or
determining the number of the MCSts included in the one resource transmission period according to configuration information of a network device.

In some embodiments, the first information includes at least one of the following: a reliability requirement of the TB; or a capability of a terminal supporting a hybrid automatic repeat request (Hybrid Automatic Repeat Request, HARQ) feedback feature.

In the embodiment, the first terminal may determine the number of MCSts included in one resource transmission period based on factors such as the reliability requirement of the TB and whether the terminal supports HARQ feedback; the number of MCSts included in one resource transmission period may also be determined based on the configuration information from the network device. For example, the UE may also determine, based on the network configuration, whether to select only one group of MCSt resources for a certain TB transmission, or more than one group of MCSt resources may be selected for a certain TB transmission.

As an optional embodiment, the method further includes: receiving a maximum number of TB transmissions corresponding to a CBR and a data priority associated with the MCSt configured by a network device.

In the embodiment, the network device may configure, for the terminal, the maximum number of TB transmissions corresponding to the CBR and the data priority, that is dedicated to MCSt, thereby determining the value of the number of slots of the MCSt.

In some embodiments, the method further includes: transmitting a transmission block (TB) and/or retransmitting the TB to a second terminal according to the value of the number of slots of the MCSt.

In the embodiment, the physical layer of the first terminal determines one or more information such as the number of slots included in one MCSt, the number of MCSts included in one resource transmission period, and the total number of slots of all the MCSts included in one resource transmission period. Based on the value of the number of slots of the MCSt, a transmission of a corresponding TB and a retransmission of the TB may be transmitted on radio resources of SL. As shown in FIG. 4, TB1 is transmitted in a first slot of MCSt1, and TB retransmission is performed in the remaining slots; TB retransmission is performed in MCSt2.

In some embodiments, the method further includes: receiving, in a first slot of an n-th MCSt, HARQ feedback information transmitted by the second terminal, where n is greater than or equal to 2.

In some embodiments, a time interval between an n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

In the embodiment, after the first terminal transmits a corresponding TB and retransmits the TB on radio resources of SL, the second terminal obtains information of an initial transmission and retransmissions of the TB in the MCSt. In a case that the second terminal supports HARQ feedback, the second terminal transmits the HARQ feedback information to the first terminal in the first slot of n-th MCSt, where n≥2. The time interval between the n-th MCSt and the (n-1)-th MCSt during which the second terminal transmits the feedback information or the first terminal receives the feedback information is greater than or equal to the duration of the HARQ round trip time (Round Trip Time, RTT) of the SL interface, and/or the time interval is greater than or equal to the duration of the HARQ round trip time (RTT) of the SL interface minus the time for transmitting the TB retransmission in the (n-1)-th MCSt, and/or the time interval is greater than or equal to the duration of the HARQ round trip time (RTT) of the SL interface minus the time for transmitting the TB retransmission in the (n-1)-th MCSt; and/or the time interval is greater than or equal to the duration of the HARQ round trip time (RTT) of the SL interface minus the time for transmitting the TB initial transmission in the (n-1)-th MCSt; and/or the time interval is greater than or equal to a preset minimum time interval requirement.

In the present disclosure, the MAC layer of the first terminal determines the value of the number of slots of the MCSt, where the number of slots included in one MCSt is constrained by the maximum COT duration to the CAPC of the TB to be transmitted currently, the maximum COT duration to the CAPC of the MCSt, and the maximum number of TB transmissions. The total number of slots of all the MCSts included in one resource transmission period and the number of MCSts included in one resource transmission period are constrained by the maximum number of TB transmissions.

In the embodiments of the present disclosure, since a number of retransmissions of a TB is limited by a maximum number of transmissions configured by the RRC layer related to CBR, a number of slots of the MCSt is also limited by the maximum number of transmissions configured by the RRC layer related to the CBR, and the number of slots of the MCSt is also related to a time length of a preemptible channel agreed upon by a CAPC corresponding to the SL-U contention mechanism. The first terminal of the present disclosure can determine one or more information such as the number of slots included in the MCSt, the number of the MCSts included in one resource transmission period, and the total number of the slots of all the MCSts included in one resource transmission period. The method for determining a number of slots of MCSt on an SL-U channel is clarified, so that the physical layer can determine a slot position required for TB transmission, effectively preventing the number of TB retransmissions from exceeding an agreed value, and allowing each UE to utilize appropriate transmission resources.

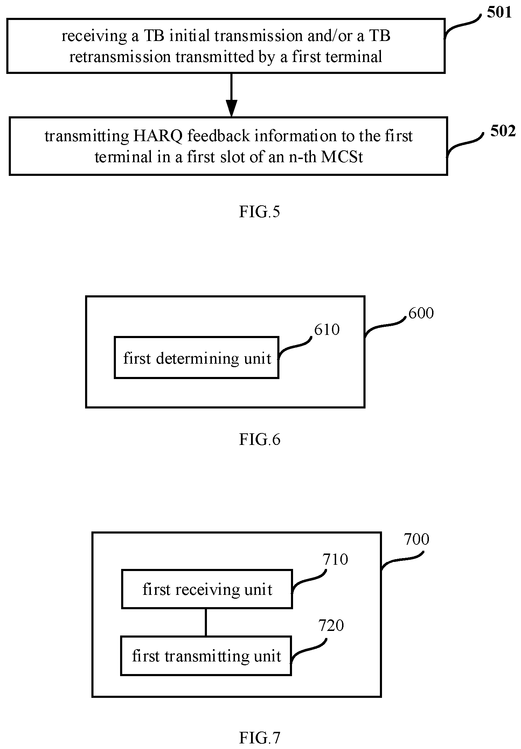

As shown in FIG. 5, an embodiment of the present disclosure further provides a data transmission method, which is applied to a second terminal and includes the following steps.

Step 501: receiving a TB initial transmission and/or a TB retransmission transmitted by a first terminal.

Step 502: transmitting HARQ feedback information to the first terminal in a first slot of an n-th MCSt, where n is greater than or equal to 2.

In some embodiments, a time interval between the n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

In the embodiment, a physical layer of the first terminal determines one or more information such as the number of slots included in one MCSt, the number of MCSts included in one resource transmission period, the total number of slots of all the MCSts included in one resource transmission period, and may transmit the corresponding TB and may retransmit the TB on radio resources of the SL based on the value of the number of slots of the MCSt.

The second terminal obtains the initial transmission and the retransmission information of the TB in the MCSt. In a case that the second terminal supports HARQ feedback, it transmits HARQ feedback information to the first terminal in the first slot of n-th MCSt, where n≥2. The time interval between the n-th MCSt and the (n-1)-th MCSt during which the second terminal transmits the feedback information or the first terminal receives the feedback information is greater than or equal to the duration of the HARQ round trip time (RTT) of the SL interface, and/or the time interval is greater than or equal to the duration of the HARQ round trip time (RTT) of the SL interface minus the time for transmitting the TB retransmission in the (n-1)-th MCSt, and/or the time interval is greater than or equal to the duration of the HARQ round trip time (RTT) of the SL interface minus the time for transmitting the TB initial transmission in the (n-1)-th MCSt; and/or the time interval is greater than or equal to a preset minimum time interval requirement.

In the embodiments of the present disclosure, after determining value of the number of slots of an MCSt, the first terminal can transmit an initial transmission and retransmissions of a corresponding TB on radio resources of SL, and the second terminal obtains information of the TB initial transmission and the TB retransmissions in the MCSt. In this scheme, the first terminal can determine a slot position required for TB (re)transmission, so the second terminal can accurately receive the TB initial transmission and the TB retransmissions, and each UE can utilize appropriate transmission resources.

The resource selection method and the data transmission method of the present disclosure are introduced in the above embodiments. Corresponding apparatuses will be further illustrated in the following embodiments in conjunction with the accompanying drawings.

Specifically, as shown in FIG. 6, an embodiment of the present disclosure provides a resource selection apparatus 600, which is applied to a first terminal and includes: a first determining unit 610, configured to determine value of the number of slots of multiple consecutive slots (MCSt), where the value of the number of slots includes at least one of the following:
a number of slots included in one MCSt;
a number of MCSts included in one resource transmission period; or
a total number of slots of all MCSts included in one resource transmission period.

In some embodiments, the first determining unit includes: a first determining subunit is used to determine the number of slots included in a MCSt according to the channel occupancy time (COT) duration to the channel access priority class (CAPC) and/or the maximum transmissions of TB.

In some embodiments, the first determining unit is specifically configured to: determine that the number of the slots included in the one MCSt is less than or equal to a first number, where the first number includes at least one of the following:
a number of slots corresponding to a maximum COT duration to the CAPC of the TB;
a number of slots corresponding to a maximum COT duration to the CAPC of the MCSt;
a number of slots corresponding to a maximum number of TB transmissions corresponding to a channel busy rate (CBR) and a data priority;
a minimum value between the number of slots corresponding to the maximum COT duration to the CAPC of the TB and the number of slots corresponding to the maximum number of TB transmissions corresponding to the CBR and the data priority; or
a minimum value between the number of slots corresponding to the maximum COT duration to the CAPC of the MCSt and the number of slots corresponding to the maximum number of TB transmissions corresponding to the CBR and the data priority.

In some embodiments, the first determining unit is specifically configured to: in a case where one TB occupies a resource of one slot, determine that the number of the slots included in the one MCSt is less than or equal to the maximum number of the TB transmissions corresponding to the CBR and the data priority.

In some embodiments, in a case where the first number is the number of slots corresponding to the maximum COT duration to the CAPC of the TB, a product of the number of the slots included in the one MCSt and a duration of each slot is less than or equal to the maximum COT duration to the CAPC of the TB; or
in a case where the first number is the number of slots corresponding to the maximum COT duration to the CAPC of the one MCSt, a product of the number of the slots included in the one MCSt and the time length of each slot is less than or equal to the maximum COT duration to the CAPC of the MCSt.

In some embodiments, the first determining unit is specifically configured to: determine that a total number of TB initial transmissions and TB retransmissions corresponding to the total number of the slots of all the MCSts included in the one resource transmission period is less than or equal to the maximum number of TB transmissions corresponding to the CBR and the data priority; or,
determine that the total number of the slots of all the MCSts included in the one resource transmission period is less than or equal to the number of slots corresponding to the maximum number of TB transmissions corresponding to the CBR and the data priority.

In some embodiments, in a case where one resource transmission period includes a plurality of MCSts, each of the MCSts satisfies at least one of the following conditions:
a product of a number of slots included in the MCSt and a duration of each slot is less than or equal to a maximum COT duration to a CAPC of a TB; or
in a case where one TB occupies a resource of one slot, the number of slots included in the MCSt is less than or equal to a maximum number of TB transmissions corresponding to a CBR and a data priority.

In some embodiments, all the MCSts included in the one resource transmission period belong to one period where periodic resources are selected and reserved by the first terminal.

In some embodiments, the first determining unit is specifically configured to: determine the number of the MCSts included in the one resource transmission period according to first information; and/or determine the number of the MCSts included in the one resource transmission period according to configuration information of a network device.

In some embodiments, the first information includes at least one of the following: a reliability requirement of the TB; or a capability of a terminal supporting hybrid automatic repeat request (HARQ) feedback.

In some embodiments, the apparatus further includes: a second receiving unit, configured to receive a maximum number of TB transmissions corresponding to a CBR and a data priority associated with the MCSt configured by a network device.

In some embodiments, the apparatus further includes: a second transmitting unit, configured to transmit a transmission block (TB) and/or retransmitting the TB to a second terminal according to the value of the number of slots of the MCSt.

In some embodiments, the apparatus further includes: receiving, in a first slot of an n-th MCSt, HARQ feedback information transmitted by the second terminal, where n is greater than or equal to 2.

In some embodiments, the apparatus further includes: a time interval between an n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

It should be noted that the above apparatus provided in the embodiment of the present disclosure can implement all method steps implemented in the above embodiments of the method applied to the first terminal, and can achieve the same technical effects. Therefore, the description and the beneficial effect of this embedment that are the same as the method embodiments will not be introduced here in detail.

Specifically, as shown in FIG. 7, an embodiment of the present disclosure provides a data transmission apparatus 700, which is applied to a second terminal and includes:
a first receiving unit 710, configured to receive a TB initial transmission and/or a TB retransmission transmitted by a first terminal; and
a first transmitting unit 720, configured to transmit HARQ feedback information to the first terminal in a first slot of an n-th MCSt, where n is greater than or equal to 2.

In some embodiments, a time interval between the n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

It should be noted that the above apparatus provided in the embodiment of the present disclosure can implement all method steps implemented in the above embodiments of the method applied to the second terminal, and can achieve the same technical effects. Therefore, the description and the beneficial effect of this embedment that are the same as the method embodiments will not be introduced here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor (processor) execute part or all of the steps of the methods described in the various embodiments of the present disclosure. The aforementioned storage media include: universal serial bus (USB) flash drive, removable hard disk, read-only memory (Read-Only Memory, ROM), random access memory (Random Access Memory, RAM), magnetic disk, optical disc or other media that can store program codes.

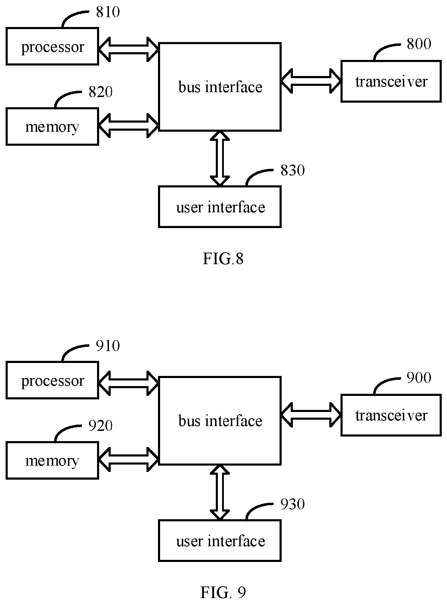

As shown in FIG. 8, an embodiment of the present disclosure further provides a terminal, which is a first terminal, and includes: a memory 820, a transceiver 800, and a processor 810. The memory 820 is configured to store a computer program; the transceiver 800 is configured to receive and send data under the control of the processor 810; the processor 810 is configured to read the computer program in the memory and perform the following operations:
determining value of the number of slots of multiple consecutive slots (MCSt), where the value of the number of slots includes at least one of the following:
a number of slots included in one MCSt;
a number of MCSts included in one resource transmission period; or
a total number of slots of all MCSts included in one resource transmission period.

In some embodiments, the processor is configured to read the computer program in the memory and perform the following operations: determining the number of the slots included in the one MCSt according to an channel occupancy time (COT) duration to a CAPC and/or a maximum number of transmissions for a TB.

In some embodiments, the processor is configured to read the computer program in the memory and perform the following operations: determining that the number of the slots included in the one MCSt is less than or equal to a first number, where the first number includes at least one of the following:
a number of slots corresponding to a maximum COT duration to the CAPC of the TB;
a number of slots corresponding to a maximum COT duration to the CAPC of the MCSt;
a number of slots corresponding to a maximum number of TB transmissions corresponding to a channel busy rate (CBR) and a data priority;
a minimum value between the number of slots corresponding to the maximum COT duration to the CAPC of the TB and the number of slots corresponding to the maximum number of TB transmissions corresponding to the CBR and the data priority; or
a minimum value between the number of slots corresponding to the maximum COT duration to the CAPC of the MCSt and the number of slots corresponding to the maximum number of TB transmissions corresponding to the CBR and the data priority.

In some embodiments, the processor is configured to read the computer program in the memory and perform the following operations: in a case where one TB occupies a resource of one slot, determining that the number of the slots included in the one MCSt is less than or equal to the maximum number of the TB transmissions corresponding to the CBR and the data priority.

In some embodiments, in a case where the first number is the number of slots corresponding to the maximum COT duration to the CAPC of the TB, a product of the number of the slots included in the one MCSt and a duration of each slot is less than or equal to the maximum COT duration to the CAPC of the TB; or
in a case where the first number is the number of slots corresponding to the maximum COT duration to the CAPC of the one MCSt, a product of the number of the slots included in the one MCSt and the time length of each slot is less than or equal to the maximum COT duration to the CAPC of the MCSt.

In some embodiments, the processor is configured to read the computer program in the memory and perform the following operations: determining that a total number of TB initial transmissions and TB retransmissions corresponding to the total number of the slots of all the MCSts included in the one resource transmission period is less than or equal to the maximum number of TB transmissions corresponding to the CBR and the data priority; or,
determining that the total number of the slots of all the MCSts included in the one resource transmission period is less than or equal to the number of slots corresponding to the maximum number of TB transmissions corresponding to the CBR and the data priority.

In some embodiments, in a case where one resource transmission period includes a plurality of MCSts, each of the MCSts satisfies at least one of the following conditions:
a product of a number of slots included in the MCSt and a duration of each slot is less than or equal to a maximum COT duration to a CAPC of a TB; or
in a case where one TB occupies a resource of one slot, the number of slots included in the MCSt is less than or equal to a maximum number of TB transmissions corresponding to a CBR and a data priority.

In some embodiments, all the MCSts included in the one resource transmission period belong to one period where periodic resources are selected and reserved by the first terminal.

In some embodiments, the processor is configured to read the computer program in the memory and perform the following operations:
determining the number of the MCSts included in the one resource transmission period according to first information; and/or
determining the number of the MCSts included in the one resource transmission period according to configuration information of a network device.

In some embodiments, the first information includes at least one of the following: a reliability requirement of the TB; or a capability of a terminal supporting hybrid automatic repeat request (HARQ) feedback.

In some embodiments, the processor is configured to read the computer program in the memory and perform the following operations: receiving a maximum number of TB transmissions corresponding to a CBR and a data priority associated with the MCSt configured by a network device.

In some embodiments, the processor is configured to read the computer program in the memory and perform the following operations: transmitting a transmission block (TB) and/or retransmitting the TB to a second terminal according to the value of the number of slots of the MCSt.

In some embodiments, the processor is configured to read the computer program in the memory and perform the following operations: receiving, in a first slot of an n-th MCSt, HARQ feedback information transmitted by the second terminal, where n is greater than or equal to 2.

In some embodiments, a time interval between an n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

In FIG. 8, the bus architecture may include any number of interconnected buses and bridges. Specifically, various circuits of one or more processors represented by the processor 810 and a memory represented by the memory 820 are linked together. The bus architecture may also link various other circuits such as peripheral devices, voltage regulators, power management circuits, etc., which are well-known in the art, and therefore, no further descriptions are provided herein. The bus interface provides an interface. The transceiver 800 may be a plurality of elements, that is, include a transmitter and a receiver, and provide a unit for communicating with various other devices on a transmission medium. For different user equipment, the user interface 830 may also be an interface capable of externally or internally connecting to required equipment. The connected equipment includes but not limited to a keypad, a display, a speaker, a microphone, a joystick, and the like.

The processor 810 is responsible for managing the bus architecture and general processing, and the memory 820 may store data used by the processor 810 when performing operations.

In some embodiments, the processor 810 may be a central processing unit (Central Processing Unit, CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), and the processor may also adopt a multi-core architecture.

The processor is configured to execute any one of the methods provided in the embodiments of the present application according to the obtained executable instructions by invoking the computer program stored in the memory. The processor and the memory may also be physically separated.

It should be noted that the above terminal provided in the embodiment of the present disclosure can implement all method steps implemented in the above method embodiments applied to the first terminal, and can achieve the same technical effects. Therefore, the description and the beneficial effect of this embedment that are the same as the method embodiments will not be introduced here in detail.

As shown in FIG. 9, an embodiment of the present disclosure further provides a terminal, which is a second terminal, and includes: a memory 920, a transceiver 900, and a processor 910. The memory 920 is configured to store a computer program; the transceiver 900 is v to receive and send data under the control of the processor 910; and the processor 910 is configured to read the computer program in the memory and perform the following operations:
receiving a TB initial transmission and/or a TB retransmission transmitted by a first terminal; and
transmitting HARQ feedback information to the first terminal in a first slot of an n-th MCSt, where n is greater than or equal to 2.

In some embodiments, a time interval between the n-th MCSt and an (n-1)-th MCSt is greater than or equal to a first value, and the first value includes at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

In FIG. 9, the bus architecture may include any number of interconnected buses and bridges. Specifically, various circuits of one or more processors represented by the processor and a memory represented by the memory 920 are linked together. The bus architecture may also link various other circuits such as peripheral devices, voltage regulators, power management circuits, etc., which are well-known in the art, and therefore, no further descriptions are provided herein. The bus interface provides an interface. The transceiver 900 may be a plurality of elements, that is, include a transmitter and a receiver, and provide a unit for communicating with various other devices on a transmission medium. For different user equipment, the user interface 930 may also be an interface capable of externally or internally connecting to required equipment. The connected equipment includes but not limited to a keypad, a display, a speaker, a microphone, a joystick, and the like.

The processor 910 is responsible for managing the bus architecture and general processing, and the memory 920 may store data used by the processor 910 when performing operations.

In some embodiments, the processor 910 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any one of the methods provided in the embodiments of the present application according to the obtained executable instructions by invoking the computer program stored in the memory. The processor and the memory may also be physically separated.

It should be noted that the above apparatus provided in the embodiment of the present disclosure can implement all method steps implemented in the above method embodiments applied to the second terminal, and can achieve the same technical effects. Therefore, the description and the beneficial effect of this embedment that are the same as the method embodiments will not be introduced here in detail.

In addition, a specific embodiment of the present disclosure further provides a processor-readable storage medium, on which a computer program is stored. When the program is executed by the processor, steps of the resource selection method described above are implemented and the same technical effects can be achieved, which will not be repeated here, to avoid repetition.

The specific embodiment of the present disclosure also provides a processor-readable storage medium, on which a computer program is stored. When the program is executed by the processor, steps of the data transmission method described above are implemented and the same technical effects can be achieved, which will not be repeated here, to avoid repetition.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

It should be noted that the technical solution provided by the embodiment of the present disclosure may be applicable to a variety of systems, particularly to a 5th generation mobile communication technology (5th Generation Mobile Communication Technology, 5G) system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, and a 5G New Radio (New Radio, NR) system. Each of the various systems includes a terminal and a network device. The systems may further include a core network portion, such as an evolved packet system (Evolved Packet System, EPS), or a 5G system (5GS).

The terminal device involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and number of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, precoded transmission, beam forming transmission, or the like.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general-purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A resource selection method, comprising:
determining, by a first terminal, a value of the number of consecutive slots for multiple consecutive slots (MCSt), wherein the value of the number of consecutive slots comprises at least one of the following:
a number of slots comprised in one MCSt;
a number of MCSts comprised in one resource transmission period; or
a total number of slots of all MCSts comprised in one resource transmission period.

2. The method according to claim 1, wherein the determining the value of the number of consecutive slots for multiple consecutive slots (MCSt) comprises:
determining the number of the slots comprised in the one MCSt according to an channel occupancy time (COT) duration to a channel access priority class (CAPC) and/or a maximum number of transmissions for a transport block (TB).

3. The method according to claim 2, wherein the determining the number of the slots comprised in the one MCSt according to the channel occupancy time (COT) duration to the CAPC and/or the maximum number of the transmissions for the TB comprises:
determining that the number of the slots comprised in the one MCSt is less than or equal to a first number, wherein the first number comprises at least one of the following:
a number of slots corresponding to a maximum COT duration to the CAPC of the TB;
a number of slots corresponding to a maximum COT duration to the CAPC of the MCSt;
a number of slots corresponding to a maximum number of TB transmissions corresponding to a channel busy rate (CBR) and a data priority;
a minimum value between the number of slots corresponding to the maximum COT duration to the CAPC of the TB and the number of slots corresponding to the maximum number of TB transmissions corresponding to the CBR and the data priority; or
a minimum value between the number of slots corresponding to the maximum COT duration to the CAPC of the MCSt and the number of slots corresponding to the maximum number of TB transmissions corresponding to the CBR and the data priority.

4. The method according to claim 3, wherein the determining that the number of the slots comprised in the one MCSt is less than or equal to the first number comprises:
in a case where one TB occupies a resource of one slot, determining that the number of the slots comprised in the one MCSt is less than or equal to the maximum number of the TB transmissions corresponding to the CBR and the data priority.

5. The method according to claim 3, wherein in a case where the first number is the number of slots corresponding to the maximum COT duration to the CAPC of the TB, a product of the number of the slots comprised in the one MCSt and a duration of each slot is less than or equal to the maximum COT duration to the CAPC of the TB; or
in a case where the first number is the number of slots corresponding to the maximum COT duration to the CAPC of the one MCSt, a product of the number of the slots comprised in the one MCSt and the time length of each slot is less than or equal to the maximum COT duration to the CAPC of the MCSt.

6. The method according to claim 1, wherein the determining the value of the number of consecutive slots for multiple consecutive slots (MCSt) comprises:
determining that a total number of TB initial transmissions and TB retransmissions corresponding to the total number of the slots of all the MCSts comprised in the one resource transmission period is less than or equal to the maximum number of TB transmissions corresponding to the CBR and the data priority;
or,
determining that the total number of the slots of all the MCSts comprised in the one resource transmission period is less than or equal to the number of slots corresponding to the maximum number of TB transmissions corresponding to the CBR and the data priority.

7. The method according to claim 1 or 6, wherein in a case where one resource transmission period comprises a plurality of MCSts, each of the MCSts satisfies at least one of the following conditions:
a product of a number of slots comprised in the MCSt and a duration of each slot is less than or equal to a maximum COT duration to a CAPC of a TB; or
in a case where one TB occupies a resource of one slot, the number of slots comprised in the MCSt is less than or equal to a maximum number of TB transmissions corresponding to a CBR and a data priority.

8. The method according to claim 1, wherein all the MCSts comprised in the one resource transmission period belong to one period where periodic resources are selected and reserved by the first terminal.

9. The method according to claim 1, wherein the determining the value of the number of consecutive slots for multiple consecutive slots (MCSt) comprises:
determining the number of the MCSts comprised in the one resource transmission period according to first information; and/or
determining the number of the MCSts comprised in the one resource transmission period according to configuration information of a network device.

10. The method according to claim 9, wherein the first information comprises at least one of the following:
a reliability requirement of the TB; or
a capability of a terminal supporting hybrid automatic repeat request (HARQ) feedback.

11. The method according to any one of claims 1 to 7, further comprising:
receiving a maximum number of TB transmissions corresponding to a CBR and a data priority associated with the MCSt configured by a network device.

12. The method according to claim 1, further comprising:
transmitting a transmission block (TB) and/or retransmitting the TB to a second terminal according to the value of the number of slots of the MCSt.

13. The method according to claim 12, further comprising:
receiving, in a first slot of an n-th MCSt, HARQ feedback information transmitted by the second terminal, wherein n is greater than or equal to 2.

14. The method according to claim 1 or 13, wherein a time interval between an n-th MCSt and an (n-1)-th MCSt is greater than or equal to a first value, and the first value comprises at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

15. A data transmission method, comprising:
receiving, by a second terminal, a TB initial transmission and/or a TB retransmission transmitted by a first terminal; and
transmitting, by the second terminal, HARQ feedback information to the first terminal in a first slot of an n-th MCSt, wherein n is greater than or equal to 2.

16. The method according to claim 15, wherein a time interval between the n-th MCSt and an (n-1)-th MCSt is greater than or equal to a first value, and the first value comprises at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

17. A terminal, comprising: a memory, a transceiver, and a processor, wherein the memory is configured to store a computer program; the transceiver is configured to transmit and receive data under the control of the processor; the processor is configured to read the computer program in the memory and perform the following operations:
determining value of the number of slots of multiple consecutive slots (MCSt), wherein the value of the number of slots comprises at least one of the following:
a number of slots comprised in one MCSt;
a number of MCSts comprised in one resource transmission period; or
a total number of slots of all MCSts comprised in one resource transmission period.

18. The terminal according to claim 17, wherein the processor is configured to read the computer program in the memory and perform the following operations:
determining the number of the slots comprised in the one MCSt according to an channel occupancy time (COT) duration to a CAPC and/or a maximum number of transmissions for a TB.

19. The terminal according to claim 18, wherein the processor is configured to read the computer program in the memory and perform the following operations:
determining that the number of the slots comprised in the one MCSt is less than or equal to a first number, wherein the first number comprises at least one of the following:
a number of slots corresponding to a maximum COT duration to the CAPC of the TB;
a number of slots corresponding to a maximum COT duration to the CAPC of the MCSt;
a number of slots corresponding to a maximum number of TB transmissions corresponding to a channel busy rate (CBR) and a data priority;
a minimum value between the number of slots corresponding to the maximum COT duration to the CAPC of the TB and the number of slots corresponding to the maximum number of TB transmissions corresponding to the CBR and the data priority; or
a minimum value between the number of slots corresponding to the maximum COT duration to the CAPC of the MCSt and the number of slots corresponding to the maximum number of TB transmissions corresponding to the CBR and the data priority.

20. The terminal according to claim 19, wherein the processor is configured to read the computer program in the memory and perform the following operations:
in a case where one TB occupies a resource of one slot, determining that the number of the slots comprised in the one MCSt is less than or equal to the maximum number of the TB transmissions corresponding to the CBR and the data priority.

21. The terminal according to claim 19, wherein in a case where the first number is the number of slots corresponding to the maximum COT duration to the CAPC of the TB, a product of the number of the slots comprised in the one MCSt and a duration of each slot is less than or equal to the maximum COT duration to the CAPC of the TB; or
in a case where the first number is the number of slots corresponding to the maximum COT duration to the CAPC of the one MCSt, a product of the number of the slots comprised in the one MCSt and the time length of each slot is less than or equal to the maximum COT duration to the CAPC of the MCSt.

22. The terminal according to claim 17, wherein the processor is configured to read the computer program in the memory and perform the following operations:
determining that a total number of TB initial transmissions and TB retransmissions corresponding to the total number of the slots of all the MCSts comprised in the one resource transmission period is less than or equal to the maximum number of TB transmissions corresponding to the CBR and the data priority; or,
determining that the total number of the slots of all the MCSts comprised in the one resource transmission period is less than or equal to the number of slots corresponding to the maximum number of TB transmissions corresponding to the CBR and the data priority.

23. The terminal according to claim 17 or 22, wherein in a case where one resource transmission period comprises a plurality of MCSts, each of the MCSts satisfies at least one of the following conditions:
a product of a number of slots comprised in the MCSt and a duration of each slot is less than or equal to a maximum COT duration to a CAPC of a TB; or
in a case where one TB occupies a resource of one slot, the number of slots comprised in the MCSt is less than or equal to a maximum number of TB transmissions corresponding to a CBR and a data priority.

24. The terminal according to claim 17, wherein all the MCSts comprised in the one resource transmission period belong to one period where periodic resources are selected and reserved by the first terminal.

25. The terminal according to claim 17, wherein the processor is configured to read the computer program in the memory and perform the following operations:
determining the number of the MCSts comprised in the one resource transmission period according to first information; and/or
determining the number of the MCSts comprised in the one resource transmission period according to configuration information of a network device.

26. The terminal according to claim 25, wherein the first information comprises at least one of the following:
a reliability requirement of the TB; or
a capability of a terminal supporting hybrid automatic repeat request (HARQ) feedback.

27. The terminal according to any one of claims 17 to 23, wherein the processor is configured to read the computer program in the memory and perform the following operations:
receiving a maximum number of TB transmissions corresponding to a CBR and a data priority associated with the MCSt configured by a network device.

28. The terminal according to claim 17, wherein the processor is configured to read the computer program in the memory and perform the following operations:
transmitting a transmission block (TB) and/or retransmitting the TB to a second terminal according to the value of the number of slots of the MCSt.

29. The terminal according to claim 28, wherein the processor is configured to read the computer program in the memory and perform the following operations:
receiving, in a first slot of an n-th MCSt, HARQ feedback information transmitted by the second terminal, wherein n is greater than or equal to 2.

30. The terminal according to claim 17 or 29, wherein a time interval between an n-th MCSt and an (n-1)-th MCSt is greater than or equal to a first value, and the first value comprises at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

31. A terminal, comprising: a memory, a transceiver, and a processor, wherein the memory is configured to store a computer program; the transceiver is configured to transmit and receive data under the control of the processor; the processor is configured to read the computer program in the memory and perform the following operations:
receiving a TB initial transmission and/or a TB retransmission transmitted by a first terminal; and
transmitting HARQ feedback information to the first terminal in a first slot of an n-th MCSt, wherein n is greater than or equal to 2.

32. The terminal according to claim 31, wherein a time interval between the n-th MCSt and an (n-1)-th MCSt is greater than or equal to a first value, and the first value comprises at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

33. A resource selection apparatus, comprising:
a first determining unit, configured to determine value of the number of slots of multiple consecutive slots (MCSt), wherein the value of the number of slots comprises at least one of the following:
a number of slots comprised in one MCSt;
a number of MCSts comprised in one resource transmission period; or
a total number of slots of all MCSts comprised in one resource transmission period.

34. The apparatus according to claim 33, wherein the first determining unit comprises:
a first determining subunit, configured to determine the number of the slots comprised in the one MCSt according to an channel occupancy time (COT) duration to a CAPC and/or a maximum number of transmissions for a TB.

35. The apparatus according to claim 34, wherein the first determining unit is specifically configured to:
determine that the number of the slots comprised in the one MCSt is less than or equal to a first number, wherein the first number comprises at least one of the following:
a number of slots corresponding to a maximum COT duration to the CAPC of the TB;
a number of slots corresponding to a maximum COT duration to the CAPC of the MCSt;
a number of slots corresponding to a maximum number of TB transmissions corresponding to a channel busy rate (CBR) and a data priority;
a minimum value between the number of slots corresponding to the maximum COT duration to the CAPC of the TB and the number of slots corresponding to the maximum number of TB transmissions corresponding to the CBR and the data priority; or
a minimum value between the number of slots corresponding to the maximum COT duration to the CAPC of the MCSt and the number of slots corresponding to the maximum number of TB transmissions corresponding to the CBR and the data priority.

36. The apparatus according to claim 35, wherein the first determining unit is specifically configured to:
in a case where one TB occupies a resource of one slot, determine that the number of the slots comprised in the one MCSt is less than or equal to the maximum number of the TB transmissions corresponding to the CBR and the data priority.

37. The apparatus according to claim 35, wherein the first determining unit is specifically configured to:
in a case where the first number is the number of slots corresponding to the maximum COT duration to the CAPC of the TB, determine that a product of the number of the slots comprised in the one MCSt and a duration of each slot is less than or equal to the maximum COT duration to the CAPC of the TB; or
in a case where the first number is the number of slots corresponding to the maximum COT duration to the CAPC of the one MCSt, determine that a product of the number of the slots comprised in the one MCSt and the time length of each slot is less than or equal to the maximum COT duration to the CAPC of the MCSt.

38. The apparatus according to claim 33, wherein the first determining unit is specifically configured to:
determine that a total number of TB initial transmissions and TB retransmissions corresponding to the total number of the slots of all the MCSts comprised in the one resource transmission period is less than or equal to the maximum number of TB transmissions corresponding to the CBR and the data priority; or,
determine that the total number of the slots of all the MCSts comprised in the one resource transmission period is less than or equal to the number of slots corresponding to the maximum number of TB transmissions corresponding to the CBR and the data priority.

39. The apparatus according to claim 33 or 38, wherein in a case where one resource transmission period comprises a plurality of MCSts, each of the MCSts satisfies at least one of the following conditions:
a product of a number of slots comprised in the MCSt and a duration of each slot is less than or equal to a maximum COT duration to a CAPC of a TB; or
in a case where one TB occupies a resource of one slot, the number of slots comprised in the MCSt is less than or equal to a maximum number of TB transmissions corresponding to a CBR and a data priority.

40. The apparatus according to claim 33, wherein all the MCSts comprised in the one resource transmission period belong to one period where periodic resources are selected and reserved by the first terminal.

41. The apparatus according to claim 33, wherein the first determining unit is specifically configured to:
determine the number of the MCSts comprised in the one resource transmission period according to first information; and/or
determine the number of the MCSts comprised in the one resource transmission period according to configuration information of a network device.

42. The apparatus according to claim 41, wherein the first information comprises at least one of the following:
a reliability requirement of the TB; or
a capability of a terminal supporting hybrid automatic repeat request (HARQ) feedback.

43. The device according to any one of claims 33 to 39, further comprising:
a second receiving unit, configured to receive a maximum number of TB transmissions corresponding to a CBR and a data priority associated with the MCSt configured by a network device.

44. The apparatus according to claim 33, further comprising:
a second transmitting unit, configured to transmit a transmission block (TB) and/or retransmitting the TB to a second terminal according to the value of the number of slots of the MCSt.

45. The apparatus according to claim 44, further comprising:
receiving, in a first slot of an n-th MCSt, HARQ feedback information transmitted by the second terminal, wherein n is greater than or equal to 2.

46. The apparatus according to claim 33 or 45, wherein a time interval between an n-th MCSt and an (n-1)-th MCSt is greater than or equal to a first value, and the first value comprises at least one of the following:
a duration of a HARQ round trip time of a sidelink interface;
a duration of a HARQ round trip time of a sidelink interface minus a time for transmitting a TB retransmission in the (n-1)-th MCSt;
a duration of a HARQ round trip time of a sidelink interface minus a time for transmitting an TB initial transmission in the (n-1)-th MCSt; or
a minimum time interval.

47. A data transmission apparatus, comprising:
a first receiving unit, configured to receive a TB initial transmission and/or a TB retransmission transmitted by a first terminal; and
a first transmitting unit, configured to transmit HARQ feedback information to the first terminal in a first slot of an n-th MCSt, wherein n is greater than or equal to 2.

48. The apparatus according to claim 47, wherein a time interval between the n-th MCSt and an (n-1)-th MCSt is greater than or equal to a first value, and the first value comprises at least one of the following:
a duration of a HARQ round trip time of a sidelink interface;
a duration of a HARQ round trip time of a sidelink interface minus a time for transmitting the TB retransmission in the (n-1)-th MCSt;
a duration of a HARQ round trip time of a sidelink interface minus a time for transmitting the TB initial transmission in the (n-1)-th MCSt; or
a minimum time interval.

49. A processor-readable storage medium, having a computer program stored thereon, wherein the computer program, when executed by a processor, causes steps of the resource selection method according to any one of claims 1 to 14 to be implemented, or causes steps of the data transmission method according to any one of claims 15 to 16 to be implemented.
